# EUROPÄISCHE PATENTSCHRIFT

(11) **EP 0 496 315 B1**
(45) Veröffentlichungstag und Bekanntmachung des Hinweises auf die Patenterteilung: **27.11.1996**
(21) Anmeldenummer: 92100817.3
(22) Anmeldetag: 18.01.1992
(51) Int. Cl.: C11D 1/12, C11D 1/83, B01F 17/00, C11D 1/18

(54) **Stabile und homogene wässrige Formulierungen von Tensiden**
Stable and homogenous aqueous surfactant formulations
Formulations aqueuses stables et homogènes de tensioactifs

(30) Priorität: 19.01.1991 DE 4101542
(43) Veröffentlichungstag der Anmeldung: 29.07.1992
(73) Patentinhaber: HOECHST AKTIENGESELLSCHAFT, 65926 Frankfurt am Main (DE)
(72) Erfinder: Martini, Thomas, Dr., W-6233 Kelkheim (Taunus) (DE); Keil, Karl-Heinz, Dr., W-6450 Hanau-Mittelbuch (DE); Wimmer, Ignaz, W-8261 Winhöring (DE)

(56) Entgegenhaltungen:
- FR-A- 1 492 485
- FR-A- 2 376 244

## Beschreibung

Wie bekannt, finden Tenside eine breite Anwendung in der Praxis, beispielsweise als Emulgatoren, Dispergiermittel, Netzmittel, Gleitmittel, Wasch- und Reinigungsmittel, Textilhilfsmittel usw. Für viele dieser Einsatzmöglichkeiten werden die Tenside in Form von wäßrigen Formulierungen genommen. Dies gilt insbesondere für die Verwendung von Tensiden als Textilhilfsmittel. Solche wäßrigen Einstellungen sind leicht zu dosieren und enthalten keine organischen Lösemittel, die unter dem Gesichtspunkt der Arbeitssicherheit und der Toxikologie bedenklich sein könnten. Eine große Anzahl solcher Tenside ist jedoch gar nicht oder nur schwer in Wasser löslich, wobei hier die Grenze zwischen Wasserlöslichkeit und Wasserunlöslichkeit durch den sogenannten HLB-Wert gezogen werden soll. Als schwer- oder unlösliche Tenside sind hier und im folgenden solche zu verstehen, deren HLB-Wert kleiner oder gleich 13, vorzugsweise kleiner 10 ist.

FR-A-2 376 244 offenbart stabile wäßrige Formulierungen von N-Alkyl-sulfosuccinamaten durch Zusatz von Fettsäureamidsulfaten, Polyethylenglykolen und nichtionischen Ethylenoxidaddukten.

Die Aufgabe der vorliegenden Erfindung besteht darin, homogene wäßrige Formulierungen solcher schwer- oder unlöslichen Tenside herzustellen. Diese Formulierungen sollen lagerstabil sein und dürfen die anwendungstechnischen Eigenschaften der jeweiligen Tenside nicht negativ beeinflussen. Zur Lösung dieser Aufgabe wurde gefunden, daß bestimmte anionische Tenside die Löslichkeit schwerlöslicher oder unlöslicher Tenside in Wasser verbessern können.

Gegenstand der Erfindung sind somit stabile wäßrige Formulierungen von Tensiden mit einem HLB-Wert kleiner oder gleich 13, bevorzugt kleiner als 10, die zusätzlich eine Verbindung der Formel (I) 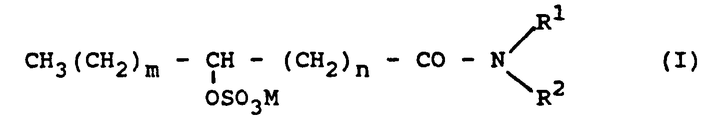 enthalten, wobei die Menge der Verbindung I 10 bis 300 Gew.-%, bezogen auf die vorhandene Menge Wasser, und die Menge an Wasser 10 bis 300 Gew.-%, bezogen auf die Menge der Tenside beträgt.

In der Formel I bedeutet R¹ C₁-C₈-Alkyl, C₁-C₈-Alkenyl, Phenyl, Alkylphenyl oder Phenalkyl mit jeweils 1 bis 4 C-Atomen in der Alkylkette oder Cyclohexyl, R² bedeutet Wasserstoff oder einen der für R¹ genannten Reste oder R¹ und R² bedeuten zusammen mit dem N-Atom einen heterocyclischen Rest, M bedeutet ein Alkalikation, ein Ammoniumkation oder ein Äquivalent eines Erdalkali- oder Aluminiumkations und m und n bedeuten jeweils unabhängig voneinander Zahlen von 6 bis 8. Bevorzugt sind solche Verbindungen der Formel I, worin R¹ und R² Methyl, Ethyl, Propyl, Isopropyl, Butyl-1, Butyl-2, Isobutyl, tert.-Butyl, Pentyl, Hexyl, Heptyl, Octyl, Isooctyl, Vinyl, Allyl, Methallyl, Crotyl oder R¹ und R² zusammen mit dem N-Atom einen Piperidin- oder Morpholinring bedeuten. Besonders bevorzugt sind Verbindungen der Formel I, worin R¹ und R² n-Butyl, R¹ Methyl und R² Phenyl oder R¹ und R² zusammen mit dem N-Atom den Morpholinring bedeuten.

Die Verbindungen der Formel I werden hergestellt durch Umsetzung von ungesättigten Fettsäuren wie beispielsweise Ölsäure, Ricinenfettsäuren, Elaidinsäure mit Aminen der Formel HNR¹R² und anschließende Sulfonierung. Die Verbindungen der Formel I können in reiner Form vorliegen, vielfach erhält man aber bei deren Herstellung Gemische von Verbindungen der Formel I mit folgenden Verbindungen:

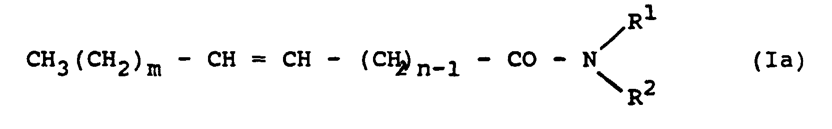

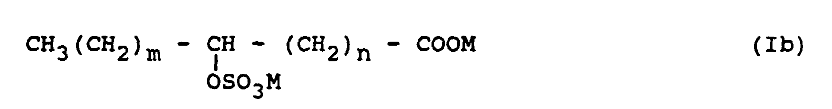

CH₃(CH₂)ₘ - CH = CH - (CH₂)ₙ₋₁ - COOM (Ic)

Derartige Mischungen kommen ebenfalls im Rahmen der vorliegenden Erfindung in Frage und demgemäß umfaßt der Begriff "Verbindungen der Formel I" auch solche Mischungen. Solche Mischungen enthalten außer der Verbindung I noch 0,5 bis 10 Gew.-%, bevorzugter Weise 1 bis 5 Gew.-% der Verbindung Ia, 0,1 bis 10 Gew.-% der Verbindung Ib und 0,1 bis 5 Gew.-% der Verbindung Ic.

Die oben genannten Verbindungen sind in der Lage, bereits in geringen Mengen die Löslichkeit von Tensiden zu verbessern, deren HLB-Wert kleiner oder gleich 13, vorzugsweise kleiner 10 ist. Als derartige Tenside kommen hier vor allem infrage Verbindungen aus der Gruppe der oxalkylierten Fettalkohole, oxalkylierten Fettsäuren, Fettsäureamide, oxalkylierte Alkylphenole, Fettsäureester von mehrwertigen Alkoholen wie Sorbitan, Sorbit oder Glycerin. Durch die Zugabe der Verbindungen der Formel I können stabile wäßrige Formulierungen dieser Tenside enrhalten werden, wobei es von besonderer Bedeutung ist, daß durch diese Verbindungen der Formel I die Eigenschaften der Tenside nicht negativ beeinflußt werden.

Die erfindungsgemäßen wäßrigen Formulierungen können noch weitere Additive enthalten wie zum Beispiel Glykole, Fettsäuren oder Sulfobernsteinsäuren. Die Menge dieser Additive kann etwa 0,5 bis 20 Gew.-%, bezogen auf die gesamte wäßrige Formulierung, betragen.

Die Herstellung der erfindungsgemäßen Formulierungen erfolgt durch einfaches Verrühren der Einzelkomponenten bei Raumtemperatur oder auch bei höheren Temperaturen. Vorzugsweise gibt man die Verbindung der Formel I in das aus Wasser, Tensid und gegebenenfalls Additiv bestehende, inhomogene Gemisch und rührt, bis eine klare, homogene Einstellung erhalten wird.

### Beispiel 1

10 g eines Ölsäureoxethylates mit 8 Ethylenoxid(EO)-Einheiten (HLB-Wert 11) werden mit 10 g Wasser vermischt. Dabei entsteht ein inhomogenes 2-Phasensystem, das zur Trennung neigt. Nach Einrühren von 2 g der Verbindung der Formel I (R¹, R² = n-C₄H₉, M = Na, m = 7, n = 8) bildet sich ein klares, homogenes und lagerstabiles Produktgemisch.

### Beispiel 2

Eine Mischung bestehend aus 40 Gewichtsteilen einer oxethylierten Ölsäure (8 EO-Einheiten), 10 Gewichtsteilen Butyldiglykol, sowie 8 Gewichtsteilen Nonylphenolnovolak nach Beispiel 7 aus der DE-PS 2 132 405 (35 proz) und 37 Teilen Wasser ist inhomogen und trennt. Nach Zugabe von 5 Gewichtsteilen der Verbindung der Formel I aus Beispiel 1 erhält man eine klare stabile Mischung.

### Beispiel 3

10 g eines n-C₁₂/C₁₈ Fettsäuremonoethanolamids, umgesetzt mit 5 EO-Einheiten, und einem HLB-Wert von 10 werden mit 8,5 g Wasser vermischt. Daraus resultiert eine pastöse, zweiphasige Einstellung. Durch Zugabe von 6,5 g der Verbindung der Formel I aus Beispiel 1 erhält man eine klare, homogene, gießbare Mischung.

### Beispiel 4

10 g eines n C₁₂/C₁₄-Alkohols, umgesetzt mit 2 Ethylenoxid-Einheiten und einem HLB-Wert von 5, werden mit 3,2 g Wasser verrührt. Man erhält eine pastöse Einstellung. Nach Zugabe von 3 g der Verbindung der Formel I aus Beispiel 1 wird bei leichtem Erwärmen auf 30 - 40 °C eine klare, gießbare und stabile Mischung erhalten, die auch bei Raumtemperatur diese Beschaffenheit beibehält.

### Beispiel 5

10 g eines iso-C₁₃-Alkohols, umgesetzt mit 2 Mol EO und einem HLB-Wert von 6 werden mit 6 g Wasser versetzt und ergeben eine unstabile milchige Emulsion. Nach Einrühren von 3,4 g der Verbindung der Formel I aus Beispiel 1 erhält man eine klare Lösung.

### Beispiel 6

10 g eines n C₁₂/C₁₆-Alkohols, umgesetzt mit 5 Mol EO und einem HLB-Wert von 9, werden mit 5 g Wasser versetzt. Erhitzt man diese Mischung auf 80 °C, erhält man eine klare Einstellung. Der gleiche Versuch wird wiederholt, es werden jedoch vor dem Erhitzen 4 g der Verbindung der Formel I aus Beispiel 1 hinzugegeben. Jetzt erhält man bereits bei 50 - 60 °C eine klare, homogene Lösung.

### Beispiel 7

10 g eines Gemisches aus n/i-C₁₂/C₁₅-Alkoholen, umgesetzt mit 3 Mol EO und einem HLB-Wert von 8, werden mit 6,2 g Wasser versetzt, wobei ein milchiges Zweiphasen-System entsteht. Nach Einrühren von 2,5 g der Verbindung der Formel I aus Beispiel 1 erhält man eine klare, lagerstabile Einstellung.

## Patentansprüche (Patentansprüche für folgende(n) Vertragsstaat(en): AT, BE, CH, DE, FR, GB, IT, LI, NL)

1. Stabile und homogene wäßrige Formulierung von Tensiden mit einem HLB-Wert kleiner oder gleich 13, die zusätzlich eine Verbindung der Formel I 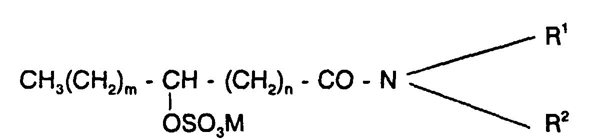 enthält, worin R¹ C₁-C₈-Alkyl, C₁-C₈-Alkenyl, Phenyl, Alkylphenyl oder Phenalkyl mit jeweils 1 bis 4 C-Atomen an der Alkylkette oder Cyclohexyl bedeutet, R² Wasserstoff bedeutet oder einen der für R¹ genannten Reste oder R¹ und R² zusammen mit dem N-Atom einen heterocyclischen Rest bedeuten, M ein Alkali- oder Ammoniumkation oder ein Äquivalent eines Erdalkali- oder Aluminiumkations und m und n jeweils unabhängig voneinander Zahlen von 6 bis 8 bedeuten.

2. Formulierung nach Anspruch 1, dadurch gekennzeichnet, daß sie 0,5 bis 10 Gew.-% einer Verbindung der Formel la 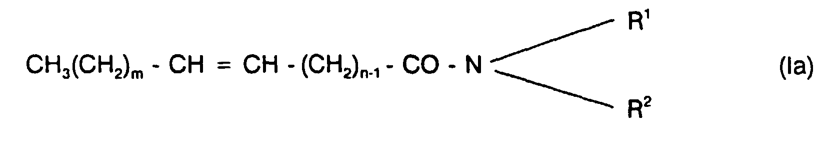 0,1 bis 10 Gew.-% einer Verbindung der Formel Ib 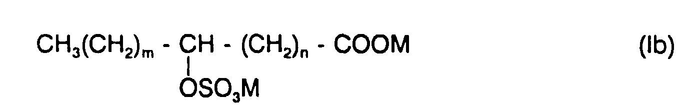 0,1 bis 5 Gew.-% einer Verbindung der Formel Ic
CH₃(CH₂)ₘ - CH = CH - (CH₂)ₙ₋₁ - COOM (Ic)
sowie eine Verbindung der Formel I in dem an 100 Gew.-% fehlenden Gesamtgewicht der Verbindungen Ia, Ib, Ic und I enthält.

3. Formulierung nach Anspruch 1 oder 2, dadurch gekennzeichnet, daß sie eine Verbindung der Formel I enthält, worin R¹ und R² Methyl, Ethyl, Propyl, Isopropyl, Butyl-1, Butyl-2, Isobutyl, tert.-Butyl, Pentyl, Hexyl, Heptyl, Octyl, Isooctyl, Vinyl, Allyl, Methallyl, Crotyl oder R¹ und R² zusammen mit dem N-Atom einen Piperidin- oder Morpholinring bedeuten.

4. Formulierung nach einem der Ansprüche 1 bis 3, dadurch gekennzeichnet, daß sie eine Verbindung der Formel I enthält, worin R¹ und R² n-Butyl, R¹ Methyl und R² Phenyl oder R¹ und R² zusammen mit dem N-Atom den Morpholinring bedeuten.

5. Formulierung nach einem der Ansprüche 1 bis 4, dadurch gekennzeichnet, daß sie Tenside mit einem HLB-Wert kleiner 10 enthält.

6. Formulierung nach einem der Ansprüche 1 bis 5, dadurch gekennzeichnet, daß sie als Tenside Verbindungen aus der Gruppe der oxalkylierten Fettalkohole, oxalkylierten Fettsäuren, Fettsäureamide, oxalkylierte Alkylphenole und Fettsäureester von mehrwertigen Alkoholen enthält.

7. Formulierung nach einem der Ansprüche 1 bis 6, dadurch gekennzeichnet, daß sie weitere Additive enthält.

8. Formulierung nach einem der Ansprüche 1 bis 7, dadurch gekennzeichnet, daß sie als Tensid ein Ölsäureoxethylat mit 8 Einheiten Ethylenoxid, eine Verbindung der Formel I, worin R¹ und R² n-C₄H₉, M Natrium und m und n 8 bedeuten, sowie ein Nonylphenolnovolak enthält.

9. Verfahren zur Herstellung der Formulierung nach einem der Ansprüche 1 bis 8, dadurch gekennzeichnet, daß man Tensid und Verbindung der Formel I gegebenenfalls mit Verbindungen der Formel Ia, Ib und Ic und/oder weiteren Additiven in Wasser verrührt.

## Patentansprüche (Patentansprüche für folgende(n) Vertragsstaat(en): ES)

1. Verfahren zur Herstellung einer stabilen und homogenen wäßrigen Formulierung von Tensiden mit einem HLB-Wert von kleiner oder gleich 13, dadurch gekennzeichnet, daß man das Tensid mit einer Verbindung der Formel I 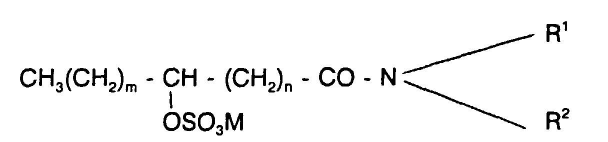 in Wasser verrührt, worin R¹ C₁-C₈-Alkyl, C₁-C₈-Alkenyl, Phenyl, Alkylphenyl oder Phenalkyl mit jeweils 1 bis 4 C-Atomen an der Alkylkette oder Cyclohexyl bedeutet, R² Wasserstoff bedeutet oder einen der für R¹ genannten Reste oder R¹ und R² zusammen mit dem N-Atom einen heterocyclischen Rest bedeuten, M ein Alkali- oder Ammoniumkation oder eine entsprechende Menge eines Erdalkali- oder Aluminiumkations und m und n jeweils unabhängig voneinander Zahlen von 6 bis 8 bedeuten.

2. Verfahren nach Anspruch 1, dadurch gekennzeichnet, daß die zu verrührende Mischung 0,5 bis 10 Gew.-% einer Verbindung der Formel la 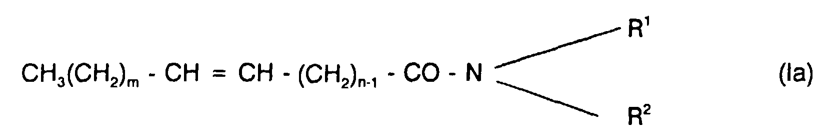 0,1 bis 10 Gew.-% einer Verbindung der Formel Ib 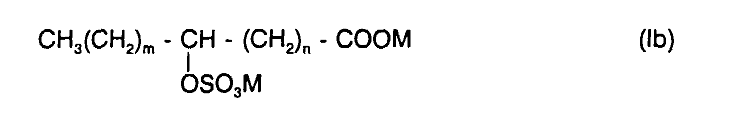 0,1 bis 5 Gew.-% einer Verbindung der Formel Ic
CH₃(CH₂)ₘ - CH = CH - (CH₂)ₙ₋₁ - COOM (Ic)
sowie eine Verbindung der Formel I in dem an 100 Gew.-% fehlenden Gesamtgewicht der Verbindungen la, Ib, Ic und I enthält.

3. Verfahren nach Anspruch 1 oder 2, dadurch gekennzeichnet, daß die zu verrührende Mischung eine Verbindung der Formel I enthält, worin R¹ und R² Methyl, Ethyl, Propyl, Isopropyl, Butyl-1, Butyl-2, Isobutyl, tert.-Butyl, Pentyl, Hexyl, Heptyl, Octyl, Isooctyl, Vinyl, Allyl, Methallyl, Crotyl oder R¹ und R² zusammen mit dem N-Atom einen Piperidin- oder Morpholinring bedeutet.

4. Verfahren nach einem der Ansprüche 1 bis 3, dadurch gekennzeichnet, daß die zu verrührende Mischung eine Verbindung der Formel I enthält, worin R¹ und R² n-Butyl, R¹ Methyl und R² Phenyl oder R¹ und R² zusammen mit dem N-Atom den Morpholinring bedeutet.

5. Verfahren nach einem der Ansprüche 1 bis 4, dadurch gekennzeichnet, daß die zu verrührende Mischung Tenside mit einem HLB-Wert kleiner 10 enthält.

6. Verfahren nach einem der Ansprüche 1 bis 5, dadurch gekennzeichnet, daß die zu verrührende Mischung als Tenside Verbindungen aus der Gruppe der oxalkylierten Fettalkohole, oxalkylierten Fettsäuren, Fettsäureamide, oxalkylierte Alkylphenole und Fettsäureester von mehrwertigen Alkoholen enthält.

7. Verfahren nach einem der Ansprüche 1 bis 6, dadurch gekennzeichnet, daß die zu verrührende Mischung weitere Additive enthält.

8. Verfahren nach einem der Ansprüche 1 bis 7, dadurch gekennzeichnet, daß die zu verrührende Mischung als Tensid ein Ölsäureoxethylat mit 8 Einheiten Ethylenoxid, eine Verbindung der Formel I, worin R¹ und R² n-C₄H₉, M Natrium und m und n 8 bedeuten, sowie ein Nonylphenolnovolak enthält.

9. Verfahren zur Herstellung der Formulierung nach einem der Ansprüche 1 bis 8, dadurch gekennzeichnet, daß man Tensid und Verbindung der Formel I gegebenenfalls mit Verbindungen der Formel Ia, Ib und Ic und/oder weiteren Additiven in Wasser verrührt.

## Claims (Claims for the following Contracting State(s): AT, BE, CH, DE, FR, GB, IT, LI, NL)

1. A stable and homogeneous aqueous formulation of surfactants having an HLB value of less than or equal to 13, which additionally contains a compound of the formula I 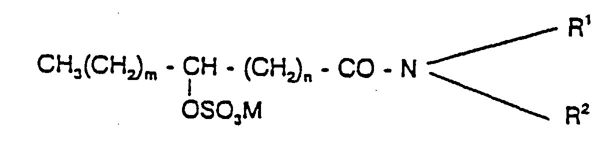 in which R¹ is C₁-C₈-alkyl, C₁-C₈-alkenyl, phenyl, alkylphenyl or phenalkyl having in each case 1 to 4 carbon atoms in the alkyl chain or cyclohexyl, R² is hydrogen or one of the radicals mentioned for R¹, or R¹ and R², together with the nitrogen atom, are a heterocyclic radical, M is an alkali metal or ammonium cation or one equivalent of an alkaline earth metal or aluminum cation and m and n in each case independently of one another are numbers from 6 to 8.

2. A formulation as claimed in claim 1, which contains 0.5 to 10 % by weight of a compound of the formula Ia 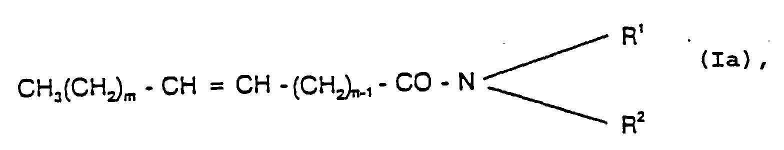 0.1 to 10 % by weight of a compound of the formula Ib 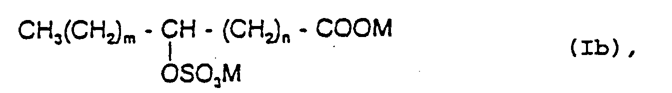 0.1 to 5 % by weight of a compound of the formula Ic
CH₃(CH₂)ₘ - CH = CH-(CH₂)ₙ₋₁ - COOM (Ic)
and a compound of the formula I in the amount by which the total weight of the compounds Ia, Ib, Ic and I is short of 100 % by weight.

3. A formulation as claimed in claim 1 or 2, which contains a compound of the formula I in which R¹ and R² are methyl, ethyl, propyl, isopropyl, 1-butyl, 2-butyl, isobutyl, tert.-butyl, pentyl, hexyl, heptyl, octyl, isooctyl, vinyl, allyl, methallyl or crotyl, or R¹ and R², together with the nitrogen atom, are a piperidine or morpholine ring.

4. A formulation as claimed in one of claims 1 to 3, which contains a compound of the formula I in which R¹ and R² are n-butyl, R¹ is methyl and R² is phenyl, or R¹ and R², together with the nitrogen atom, are the morpholine ring.

5. A formulation as claimed in one of claims 1 to 4, which contains surfactants having an HLB value of less than 10.

6. A formulation as claimed in one of claims 1 to 5, which contains, as surfactants, compounds from the group comprising oxyalkylated fatty alcohols, oxyalkylated fatty acids, fatty acid amides, oxyalkylated alkylphenols and fatty acid esters of polyhydric alcohols.

7. A formulation as claimed in one of claims 1 to 6, which contains further additives.

8. A formulation as claimed in one of claims 1 to 7, which contains, as the surfactant, an oleic acid oxyethylate having 8 units of ethylene oxide, a compound of the formula I in which R¹ and R² are n-C₄H₉, M is sodium and m and n are 8, and a nonylphenol novolak.

9. A process for the preparation of a formulation as claimed in one of claims 1 to 8, which comprises stirring the surfactant and compound of the formula I into water, if appropriate with compounds of the formulae Ia, Ib and Ic and/or further additives.

## Claims (Claims for the following Contracting State(s): ES)

1. A process for the preparation of a stable and homogeneous aqueous formulation of surfactants having an HLB value of less than or equal to 13, which comprises stirring the surfactant into water with a compound of the formula I 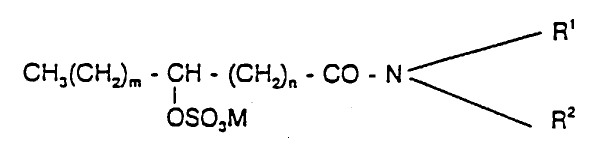 in which R¹ is C₁-C₈-alkyl, C₁-C₈-alkenyl, phenyl, alkylphenyl or phenalkyl having in each case 1 to 4 carbon atoms in the alkyl chain or cyclohexyl, R² is hydrogen or one of the radicals mentioned for R¹, or R¹ and R², together with the nitrogen atom, are a heterocyclic radical, M is an alkali metal or ammonium cation or a corresponding amount of an alkaline earth metal or aluminum cation and m and n in each case independently of one another are numbers from 6 to 8.

2. The process as claimed in claim 1, wherein the mixture to be stirred contains 0.5 to 10 % by weight of a compound of the formula Ia 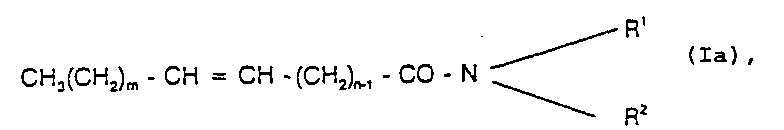 0.1 to 10 % by weight of a compound of the formula Ib 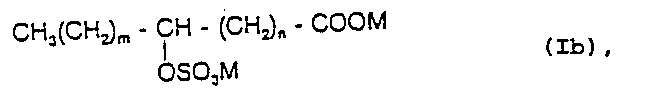 0.1 to 5 % by weight of a compound of the formula Ic
CH₃(CH₂)ₘ - CH = CH-(CH₂)ₙ₋₁ - COOM (Ic)
and a compound of the formula I in the amount by which the total weight of the compounds Ia, Ib, Ic and I is short of 100 % by weight.

3. The process as claimed in claim 1 or 2, wherein the mixture to be stirred contains a compound of the formula I in which R¹ and R² are methyl, ethyl, propyl, isopropyl, 1-butyl, 2-butyl, isobutyl, tert.-butyl, pentyl, hexyl, heptyl, octyl, isooctyl, vinyl, allyl, methallyl or crotyl, or R¹ and R², together with the nitrogen atom, are a piperidine or morpholine ring.

4. The process as claimed in one of claims 1 to 3, wherein the mixture to be stirred contains a compound of the formula I in which R¹ and R² are n-butyl, R¹ is methyl and R² is phenyl, or R¹ and R², together with the nitrogen atom, are the morpholine ring.

5. The process as claimed in one of claims 1 to 4, wherein the mixture to be stirred contains surfactants having an HLB value of less than 10.

6. The process as claimed in one of claims 1 to 5, wherein the mixture to be stirred contains, as surfactants, compounds from the group comprising oxyalkylated fatty alcohols, oxyalkylated fatty acids, fatty acid amides, oxyalkylated alkylphenols and fatty acid esters of polyhydric alcohols.

7. The process as claimed in one of claims 1 to 6, wherein the mixture to be stirred contains further additives.

8. The process as claimed in one of claims 1 to 7, wherein the mixture to be stirred contains, as the surfactant, an oleic acid oxyethylate having 8 units of ethylene oxide, a compound of the formula I in which R¹ and R² are n-C₄H₉, M is sodium and m and n are 8, and a nonylphenol novolak.

9. A process for the preparation of a formulation as claimed in one of claims 1 to 8, which comprises stirring the surfactant and compound of the formula I into water, if appropriate with compounds of the formulae Ia, Ib and Ic and/or further additives.

## Revendications (Revendications pour l'(les) Etat(s) contractant(s) suivant(s): AT, BE, CH, DE, FR, GB, IT, LI, NL)

1. Formulation aqueuse stable et homogène d'agents tensioactifs ayant un indice HLB inférieur ou égal à 13, qui contient en outre un composé de formule I 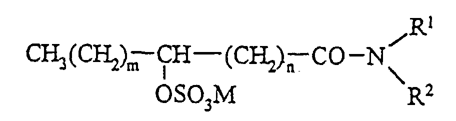 dans laquelle R¹ représente un reste alkyle en C₁-C₈, alcényle en C₁-C₈, phényle, diphényle ou phénylalkyle ayant chacun 1 à 4 atomes de carbone dans la chaîne alkyle, ou cyclohexyle, R² représente un atome d'hydrogène ou l'un des restes indiqués pour R¹, ou bien R¹ et R² forment ensemble avec l'atome d'azote un reste hétérocyclique, M représente un cation de métal alcalin ou d'ammonium ou un équivalent d'un cation de métal alcalino-terreux ou d'aluminium, et m et n représentent chacun, indépendamment l'un de l'autre, des chiffres de 6 à 8.

2. Formulation selon la revendication 1, caractérisée en ce qu'elle contient 0,5 à 10 % en masse d'un composé de formule Ia 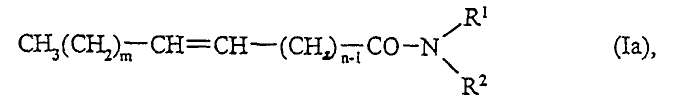 0,1 à 10 % en masse d'un composé de formule Ib 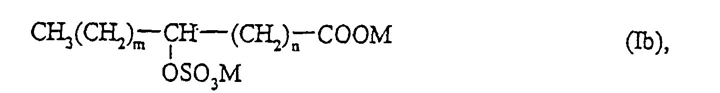 0,1 à 5 % en masse d'un composé de formule Ic 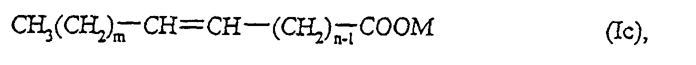 ainsi qu'un composé de formule I en une quantité complétant à 100 % la masse totale des composés Ia, Ib, Ic et I.

3. Formulation selon la revendication 1 ou 2, caractérisée en ce qu'elle contient un composé de formule I dans lequel R¹ et R² représentent des restes méthyle, éthyle, propyle, isopropyle, but-1-yle, but-2-yle, isobutyle, tert-butyle, pentyle, hexyle, heptyle, octyle, isooctyle, vinyle, allyle, méthallyle ou crotyle, ou R¹ et R² forment ensemble avec l'atome d'azote un noyau pipéridine ou morpholine.

4. Formulation selon l'une des revendications 1 à 3, caractérisée en ce qu'elle contient un composé de formule I dans lequel R¹ et R² représentent un reste n-butyle, R¹ est un reste méthyle et R² un reste phényle ou R¹ et R² forment ensemble avec l'atome d'azote le noyau morpholine.

5. Formulation selon l'une des revendications 1 à 4, caractérisée en ce qu'elle contient des agents tensioactifs ayant un indice HLB inférieur à 10.

6. Formulation selon l'une des revendications 1 à 5, caractérisée en ce qu'elle contient comme agents tensioactifs des composés du groupe des alcools gras oxyalkylés, des acides gras oxyalkylés, des amides d'acides gras, des alkylphénols oxyalkylés et des esters d'acides gras avec des polyalcools.

7. Formulation selon l'une des revendications 1 à 6, caractérisée en ce qu'elle contient d'autres additifs.

8. Formulation selon l'une des revendications 1 à 7, caractérisée en ce qu'elle contient un oxyéthylate d'acide oléique ayant 8 unités d'oxyde d'éthylène comme agent tensioactif, un composé de formule I dans lequel R¹ et R² sont n-C₄H₉, M est le sodium et m et n sont égaux à 8, et une nonylphénolnovolaque.

9. Procédé de préparation de la formulation selon l'une des revendications 1 à 8, caractérisé en ce que l'on délaye dans de l'eau l'agent tensioactif et le composé de formule I, éventuellement avec des composés de formule Ia, Ib et Ic et/ou d'autres additifs.

## Revendications (Revendications pour l'(les) Etat(s) contractant(s) suivant(s): ES)

1. Procédé de préparation d'une formulation aqueuse stable et homogène d'agents tensioactifs ayant un indice HLB inférieur ou égal à 13, caractérisé en ce que l'on délaie l'agent tensioactif dans de l'eau avec un composé de formule I 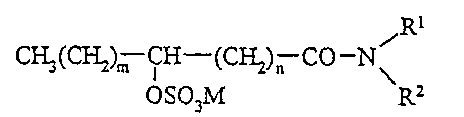 dans laquelle R¹ représente un reste alkyle en C₁-C₈, alcényle en C₁-C₈, phényle, alkylphényle ou phénylalkyle ayant chacun 1 à 4 atomes de carbone dans la chaîne alkyle, ou cyclohexyle, R² représente un atome d'hydrogène ou l'un des restes indiqués pour R¹, ou bien R¹ et R² forment ensemble avec l'atome d'azote un reste hétérocyclique, M représente un cation de métal alcalin ou d'ammonium ou un équivalent d'un cation de métal alcalino-terreux ou d'aluminium, et m et n représentent chacun, indépendamment l'un de l'autre, des chiffres de 6 à 8.

2. Procédé selon la revendication 1, caractérisé en ce que le mélange à délayer contient 0,5 à 10 % en masse d'un composé de formule la 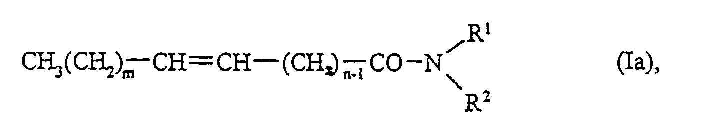 0,1 à 10 % en masse d'un composé de formule Ib 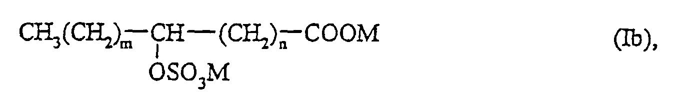 0,1 à 5 % en masse d'un composé de formule Ic 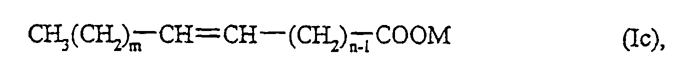 ainsi qu'un composé de formule I en une quantité complétant à 100 % la masse totale des composés Ia, Ib, Ic et I.

3. Procédé selon la revendication 1 ou 2, caractérisé en ce que le mélange à délayer contient un composé de formule I dans lequel R¹ et R² représentent des restes méthyle, éthyle, propyle, isopropyle, but-1-yle, but-2-yle, isobutyle, tert-butyle, pentyle, hexyle, heptyle, octyle, isooctyle, vinyle, allyle, méthallyle ou crotyle, ou R¹ et R² forment ensemble avec l'atome d'azote un noyau pipéridine ou morpholine.

4. Procédé selon l'une des revendications 1 à 3, caractérisé en ce que le mélange à délayer contient un composé de formule I dans lequel R¹ et R² représentent un reste n-butyle, R¹ est un reste méthyle et R² un groupe reste ou R¹ et R² forment ensemble avec l'atome d'azote le noyau morpholine.

5. Procédé selon l'une des revendications 1 à 4, caractérisé en ce que le mélange à délayer contient des agents tensioactifs ayant un indice HLB inférieur à 10.

6. Procédé selon l'une des revendications 1 à 5, caractérisé en ce que le mélange à délayer contient comme agents tensioactifs des composés du groupe des alcools gras oxyalkylés, des acides gras oxyalkylés, des amides d'acides gras, des alkylphénols oxyalkylés et des esters d'acides gras avec des polyalcools.

7. Procédé selon l'une des revendications 1 à 6, caractérisé en ce que le mélange à délayer contient d'autres additifs.

8. Procédé selon l'une des revendications 1 à 7, caractérisé en ce que le mélange à délayer contient un oxyéthylate d'acide oléique ayant 8 unités d'oxyde d'éthylène comme agent tensioactif, un composé de formule I dans lequel R¹ et R² sont n-C₄H₉, M est le sodium et m et n sont égaux à 8, et une nonylphénolnovolaque.

9. Procédé de préparation de la formulation selon l'une des revendications 1 à 8, caractérisé en ce que l'on délaye dans de l'eau l'agent tensioactif et le composé de formule I, éventuellement avec des composés de formule Ia, Ib et Ic et/ou d'autres additifs.
